# EUROPÄISCHE PATENTANMELDUNG

(11) **EP 2 865 622 A1**
(43) Veröffentlichungstag der Anmeldung: **29.04.2015**
(21) Anmeldenummer: 14188371.0
(22) Anmeldetag: 09.10.2014
(51) Int. Cl.: B65G 69/00

(54) **Ladestellenanfahrhilfsvorrichtung, damit versehene Ladestelle sowie Verfahren zum Unterstützen des Anfahrens einer Ladestelle**

(30) Priorität: 25.10.2013 DE 102013111782
(71) Anmelder: Hörmann KG Antriebstechnik, 33803 Steinhagen (DE)
(72) Erfinder: Sosna, Karsten, 33820 Borgholzhausen (DE)
(74) Vertreter: Flügel Preissner Kastel Schober

(57) **Zusammenfassung**

Die Erfindung betrifft eine Ladestellenanfahrhilfsvorrichtung (12) zur Unterstützung eines Anfahrens einer Ladestelle (10) durch ein zu be- oder entladendes Fahrzeug (20) mit im Bereich der Ladestelle (10) anzuordnenden Erfassungseinrichtung (18) zur Erfassung des Fahrzeugs (20) und einer Signaleinrichtung (22) zum Senden eines Signals (54, 58) an das Fahrzeug (20) oder dessen Fahrer (24), wobei die Erfassungseinrichtung (18) zur automatischen Erfassung einer seitlichen Versetzung oder eines schrägen Winkels des Fahrzeugs (20) relativ zu der Ladestelle (10) ausgebildet ist und wobei die Signaleinrichtung (22) dazu ausgebildet ist, in Abhängigkeit von einer entsprechenden Erfassung durch die Erfassungseinrichtung (18) ein eine seitliche Versetzung oder einen schrägen Winkel angebendes Signal (54, 58) an das Fahrzeug (20) oder dessen Fahrer (24) zur Korrektur des Anfahrvorganges anzugeben. Weiter wird ein Verfahren zum Unterstützen des Anfahrens einer Ladestelle mit Hilfe einer solchen Ladestellenanfahrhilfsvorrichtung (12) beschrieben.

## Beschreibung

Die Erfindung betrifft eine Ladestellenanfahrhilfsvorrichtung zur Unterstützung eines Anfahrens einer Ladestelle durch ein zu be- oder entladendes Fahrzeug. Weiter betrifft die Erfindung ein Verfahren zum Unterstützen oder Steuern eines Anfahrens eines Fahrzeugs an eine Ladestelle.

Viele Gebäude für Gewerbebetriebe weisen Ladestellen auf. Beispielsweise weisen Lagerhallen oder Logistikzentren eine ganze Reihe von Ladestellen auf, die z.B. Laderampen, Ladedocks, Tore und Vorsatzschleusen aufweisen. Eine Ladestelle mit einer Ladebrücke und daran integrierten Anfahrpuffern ist aus der DE 699 22 376 T2 bekannt.

Derartige Ladestellen werden von Fahrzeugen, dies sind in der Regel Lastkraftwagen, angefahren, damit die Fahrzeuge dort beladen oder entladen werden können. In der Regel fahren Lastkraftwagen dabei rückwärts an die Ladestelle heran, um den Lastkraftwagen, einen Auflieger oder einen Anhänger von der Rückseite aus zu beladen. Hierzu werden z.B. Ladebrücken nach Öffnen der rückseitigen Ladeöffnung so herausgefahren, dass sie auf einer hinteren Ladekante aufliegen.

Insbesondere bei Kühlhäusern oder auch bei Lagerhäusern in kalten Gebieten ist es wünschenswert, einen Wetterschutz und einen klimatischen Abschluss zwischen einer Toröffnung an der Ladestelle und dem zu beladenden Fahrzeugraum vorzusehen. Hierzu können insbesondere Vorsatzschleusen verwendet werden, die ein rückwärtiges Ende des Fahrzeuges umschließen und abdichten.

Damit die an den unterschiedlichen Ladestellen vorhandenen Verladeeinrichtungen und Schleusen optimal funktionieren, ist ein möglichst mittiges und geradliniges Anfahren der Ladestelle durch das zu be- oder entladende Fahrzeug hilfreich.

Es gibt bereits an einer Ladestelle vorgesehene Ladestellenanfahrhilfsvorrichtungen, die einen Fahrer eines zu be- oder entladenden Fahrzeuges beim Heranfahren an eine Ladestelle unterstützen.

Als ein Beispiel für eine Ladestellenanfahrhilfsvorrichtung seien die sogenannten LKW-Einfahrhilfen genannt, die zuweilen vor einer Ladestelle vorgesehen sind. Unter dem Begriff LKW-Einfahrhilfe versteht man die Unterstützung des Kraftfahrers beim rückwärts Andocken an Verladeöffnungen mit Hilfe von robusten mechanischen Leitschienen, beispielsweise aus Stahlrohr oder aus Beton. Werden derartige Einfahrhilfen vor einer Ladestelle positioniert, sollen Lastkraftwagen behutsam in die richtige Fahrspur gedrückt werden. Der Kraftfahrer merkt dabei den Widerstand und kann somit die Richtung des zurücksetzenden Lastkraftwagens korrigieren. Es müssen dabei besondere Maßnahmen vorgesehen werden, um nicht nur die Ladestelle, sondern auch den Lastkraftwagen vor Beschädigungen zu schützen. Zum Beispiel sind hier runde Stahlrohre vorgesehen, wobei die Einfahrt in die durch die Stahlrohre begrenzte Fahrspur auch noch aufgeweitet ist.

Derartige LKW-Einfahrhilfen sind jedoch mit hohem Materialaufwand und hohem Montageaufwand verbunden. Beschädigungen am LKW können - insbesondere wenn kleinere Fahrzeuge heranfahren - nicht immer vermieden werden. Außerdem sind durch das Vorsehen derartiger Einfahrhilfen vor den Ladestellen das Räumen von Schnee und Eis sowie das Reinigen der Vorflächen mittels Maschinen stark behindert.

Aus der DE-PS 1 221 978 ist eine Schutzvorrichtung für rückwärts an Verladerampen oder sonstige Begrenzungen heranfahrende Fahrzeuge bekannt, die ein korrektes Abstellen des Fahrzeuges an der Ladestelle ohne Beschädigungen unterstützen soll. Hierzu ist an der Ladestelle eine elastische Leiste unter Zwischenschaltung eines Auslöseschalters für eine Signalvorrichtung angebracht. Beim Heranfahren des Fahrzeuges an die Ladestelle kontaktiert dieses die elastische Leiste und drückt diese zusammen. Die Leiste soll so vor Beschädigungen schützen. Gleichzeitig wird der Auslöseschalter betätigt, um eine Signaleinrichtung zu betätigen. Beispielsweise zeigt dann eine Ampel an, dass der Fahrer halten soll.

Aus dem k-Magazin, Ausgabe 07.08.2003, erhältlich über das Internet, Artikel "Auf den Zentimeter kommt es an, das hafaEye: Andockhilfe für LKW-Fahrer" ist eine Vorrichtung zur Unterstützung eines Fahrers beim Andocken an eine Ladestelle bekannt, wobei mittels unmittelbar vor der Ladestelle angebrachten Sensoren ein vor der Ladestelle befindliches Fahrzeug und dessen Abstand zur Ladekante erfasst wird. Abhängig von der Erfassung des Abstandes wird eine Ampel-Anlage gesteuert. Ist das Fahrzeug so nahe herangefahren, dass ein eventuell verbleibender Abstand ausreichend gering ist, um eine Ladebrücke auf das Fahrzeug ablegen zu können, wird dies dem Fahrer mittels eines Lichtzeichens angezeigt. Diese bekannte Vorrichtung "hafaEye" ist somit nichts Anderes als eine moderne Umsetzung der bereits aus der DE-PS 1 221 978 bekannten Lehre.

Aus der DE 103 08 668 A1 ist eine an einem Lastkraftwagen zu realisierende Vorrichtung zur Durchführung eines Andockvorgangs des Lastkraftwagens sowie ein damit durchführbares Andockverfahren bekannt. An einer rückwärtigen Seite des Lastkraftwagens sind Abstandsmesseinrichtungen vorgesehen, die einen Abstand des Lastkraftwagens von der ortsfesten Ladestelle messen. Eine am Fahrzeug vorgesehene Fahrzeugsteuerung steuert Bremsmittel und Antriebsmittel in Abhängigkeit von den Signalen der Abstandmesseinrichtung.

Aus der EP 0 954 773 sind ein Verfahren und eine Anordnung zur Andockpositionierung einer autonomen mobilen Einheit zur Verwendung bei fahrerlosen Transportsystemen bekannt. Die Ladestelle sendet einen aufgefächerten Lichtkegel aus. An dem autonomen Fahrzeug sind zwei ortsauflösende Lichtdetektoren angeordnet, wobei das Fahrzeug aus der Ortsposition, wo die Lichtaussendung an den beiden Detektoren gemessen wird, relative Lage und Ausrichtung des autonomen Fahrzeugs zu der Andockposition errechnet.

Aus der EP 2 373 558 B1 ist ein Verfahren und ein System zur Unterstützung eines Andockvorgangs zum Andocken eines Lastkraftwagens an eine Ladestelle bekannt. Eine Lage- und Orientierungerfassungseinrichtung zur Erfassung einer Lage und einer Orientierung des Lastkraftwagens relativ zu einer zugeordneten Stelle weist ein Paar an der Ladestelle angeordnete Sender und ein Paar am Lastkraftwagen angeordnete Empfänger auf. Die Lage und Orientierung wird durch vier Abstandsmessungen der jeweiligen Abstände zwischen dem ersten und dem zweiten Sender jeweils zu dem ersten und dem zweiten Empfänger ermittelt. Die erhaltenen Informationen werden durch eine am Fahrzeug - z.B. im Cockpit oder an den Außenspiegeln - angeordnete Signale angezeigt. Demnach offenbart die EP 2 373 558 B1 eine Ladestellenanfahrhilfsvorrichtung zur Unterstützung eines Anfahrens einer Ladestelle durch ein zu be- oder entladendes Fahrzeug mit einer Positions- und Orientierungserfassungseinrichtung zur Erfassung einer Position und Orientierung des Fahrzeugs und einer Signaleinrichtung zum Senden eines Signals an den Fahrer des Fahrzeugs, wobei die Positions- und Orientierungserfassungseinrichtung zur automatischen Erfassung einer seitlichen Versetzung oder eines schrägen Winkels des Fahrzeugs relativ zu der Ladestelle ausgebildet ist und wobei die Signaleinrichtung dazu ausgebildet ist, in Abhängigkeit von einer entsprechenden Erfassung durch die Erfassungseinrichtung ein eine seitliche Versetzung oder einen schrägen Winkel angebendes Signal an den Fahrer zur Korrektur des Anfahrvorganges anzugeben. Weiter offenbart die EP 2 373 558 B1 ein Verfahren zum Unterstützen oder Steuern eines Anfahrens eines Fahrzeugs an eine Ladestelle umfassend:
a) automatisches Erfassen einer Schrägstellung oder einer seitlichen Versetzung des Fahrzeugs relativ zu der Ladestelle, und
b) Abgeben eines Signals in Abhängigkeit der erfassten Schrägstellung oder seitlichen Versetzung zur Korrektur des Anfahrens.

Aufgabe der Erfindung ist es, eine vereinfachte Ladestellenanfahrhilfsvorrichtung zu schaffen, die einen Anfahrvorgang eines Fahrzeuges an eine Ladestelle universell einsetzbar unterstützt. Weiter soll ein einfacheres, universelleres Verfahren zur Unterstützung des Anfahrens eines Fahrzeuges an eine Ladestelle geschaffen werden.

Diese Aufgabe wird durch eine Vorrichtung und ein Verfahren gemäß den unabhängigen Ansprüchen gelöst.

Vorteilhafte Ausgestaltungen der Erfindung sind Gegenstand der Unteransprüche.

Gemäß einem ersten Aspekt schafft die Erfindung eine Ladestellenanfahrhilfsvorrichtung zur Unterstützung eines Anfahrens einer Ladestelle durch ein zu be- oder entladendes Fahrzeug mit einer im Bereich der Ladestelle anzuordnenden Fahrzeugerfassungseinrichtung zur Erfassung des Fahrzeugs und einer Signaleinrichtung zum Senden eines Signals an das Fahrzeug oder dessen Fahrer, wobei die Fahrzeugerfassungseinrichtung zur automatischen Erfassung einer seitlichen Versetzung oder eines schrägen Winkels des Fahrzeugs relativ zu der Ladestelle ausgebildet ist und wobei die Signaleinrichtung dazu ausgebildet ist, in Abhängigkeit von einer entsprechenden Erfassung durch die Fahrzeugerfassungseinrichtung ein eine seitliche Versetzung oder einen schrägen Winkel angebendes Signal an das Fahrzeug oder dessen Fahrer zur Korrektur des Anfahrvorganges anzugeben.

Vorzugsweise ist die Fahrzeugerfassungseinrichtung zur Anordnung an der Ladestelle ausgebildet.

Vorzugsweise ist auch die Signaleinrichtung zur Anordnung an der Ladestelle ausgebildet.

Es ist bevorzugt, dass die Fahrzeugerfassungseinrichtung eine an einer ersten Seite der Ladestelle anzuordnende erste Detektionseinheit aufweist, die dazu ausgebildet ist, wenigstens einen sich im Wesentlichen quer zu einer Ladekante der Ladestelle erstreckenden seitlich an der Ladestelle angeordneten ersten Detektionsbereich daraufhin zu überwachen, ob sich ein Fahrzeug in diesem ersten Detektionsbereich befindet oder diesen kreuzt, und/oder dass die Fahrzeugerfassungseinrichtung eine an einer zweiten Seite der Ladestelle anzuordnende zweite Detektionseinheit aufweist, die dazu ausgebildet ist, wenigstens einen sich im Wesentlichen quer zu einer Ladekante der Ladestelle erstreckenden seitlich an der Ladestelle angeordneten zweiten Detektionsbereich daraufhin zu überwachen, ob sich ein Fahrzeug in diesem zweiten Detektionsbereich befindet oder diesen kreuzt.

Es ist bevorzugt, dass die Fahrzeugerfassungseinrichtung derart ausgebildet ist, dass sie das Vorliegen einer Schrägstellung oder einer seitlichen Versetzung des Fahrzeugs dann erkennt, wenn von der ersten und der zweiten Detektionseinheit nur eine das Fahrzeug in dem jeweils zugeordneten Detektionsbereich erfasst.

Es ist bevorzugt, dass die Fahrzeugerfassungseinrichtung derart ausgebildet ist, dass sie einen korrekten, geradlinigen Anfahrvorgang erfasst, wenn von der ersten und der zweiten Detektionseinheit beide oder keine das Fahrzeug erfassen.

Es ist bevorzugt, dass die Signaleinrichtung einen ersten Signalgeber zum Anzeigen einer Versetzung oder Schrägstellung des Fahrzeugs zu der ersten Seite hin und einen zweiten Signalgeber zum Anzeigen einer Versetzung oder Schrägstellung des Fahrzeugs zu der zweiten Seite hin aufweist.

Es ist bevorzugt, dass der erste Signalgeber zur Abgabe eines optischen Signals an der ersten Seite ausgebildet ist und der zweite Signalgeber zur Abgabe eines optischen Signals an der zweiten Seite ausgebildet ist.

Es ist bevorzugt, dass der erste Signalgeber mit der ersten Detektionseinheit verbunden ist, um ein wenigstens ein erstes Signalzeichen abzugeben, wenn die erste Detektionseinheit das Fahrzeug in dem ersten Detektionsebenenbereich erfasst und/oder dass der zweite Signalgeber mit der zweiten Detektionseinheit verbunden ist, um wenigstens ein zweites Signalzeichen abzugeben, wenn die zweite Detektionseinheit das Fahrzeug in dem zweiten Detektionsebenenbereich erfasst.

Gemäß einem weiteren Aspekt schafft die Erfindung eine Ladestelle oder ein Ladedock oder eine Verladevorrichtung zur Anbringung an einem Gebäude, umfassend eine Ladestellenanfahrhilfsvorrichtung gemäß einer der zuvor erläuterten Ausgestaltungen.

Vorzugsweise haben die Ladestelle oder das Ladedock bzw. die Verladevorrichtung eine Ladebrücke und einen ersten Anfahrpuffer im Bereich einer ersten Seite der Ladebrücke und einen zweiten Anfahrpuffer im Bereich einer zweiten Seite der Ladebrücke, wobei sich der erste Detektionsbereich zumindest teilweise von dem ersten Puffer aus weiter in Richtung der ersten Seite versetzt und in Richtung von der Ladebrücke weg erstreckt und sich der zweite Detektionsbereich zumindest teilweise von dem zweiten Puffer aus weiter in Richtung der zweiten Seite versetzt und in Richtung von der Ladebrücke weg erstreckt.

Vorzugsweise weist die Ladestelle bzw. das Ladedock bzw. die Verladevorrichtung sowohl die Fahrzeugerfassungseinrichtung als auch die Signaleinrichtung auf.

Gemäß einem weiteren Aspekt schafft die Erfindung ein Verfahren zum Unterstützen oder Steuern eines Anfahrens eines Fahrzeugs an eine Ladestelle umfassend:
a) automatisches Erfassen einer Schrägstellung oder einer seitlichen Versetzung des Fahrzeugs relativ zu der Ladestelle, und
b) Abgeben eines Signals in Abhängigkeit der erfassten Schrägstellung oder seitlichen Versetzung zur Korrektur des Anfahrens, wobei Schritt a) umfasst: Überwachen, ob sich das eine Teil des Fahrzeugs in einem linken Detektionsbereich links von der Ladestelle und/oder in einem rechten Detektionsbereich rechts von der Ladestelle befindet, und wobei Schritt b) umfasst: Abgeben eines optischen Zeichens auf der linken Seite neben der Ladestelle, wenn sich das Fahrzeug in dem linken Detektionsbereich befindet, und Abgeben eines optischen Zeichens auf der rechten Seite neben der Ladestelle, wenn sich das Fahrzeug in dem rechten Detektionsbereich befindet.

Anders als bei bisher bekannten Andockhilfen, wo lediglich ein Abstand eines Fahrzeuges zur Ladekante erfasst wird, ist bei der Erfindung vorgesehen, dass eine an der Ladestelle anzuordnende Fahrzeugerfassungseinrichtung eine Schrägstellung oder eine seitliche Versetzung des Fahrzeuges zu der Ladestelle hin erkennt. Abhängig von einer Erfassung der Schrägstellung oder der seitlichen Versetzung - eventuell auch von dem Grad der Schrägstellung oder der Versetzung abhängig - wird dann ein Signal erzeugt und von der Ladestelle aus zu dem Fahrzeug gesendet.

In einer einfachen Version kann das Signal ähnlich wie bei den bekannten an einer Ladestelle angeordneten Andockhilfen ein Lichtsignal sein, das durch den Fahrer, insbesondere in seinen Rückspiegeln, gesehen werden kann.

Vorzugsweise ist auf einer ersten Seite, beispielsweise einer in Draufsicht auf die Ladestelle linke Seite, eine erste Detektionseinheit vorgesehen und auf der zweiten Seite der Ladestelle, beispielsweise auf der in Draufsicht auf die Ladestelle rechten Seite, eine zweite Detektionseinheit vorgesehen.

Je nach Auswertung und Art der Detektionseinheit lassen sich Schrägstellungen oder seitliche Versetzungen eines Fahrzeuges, wie beispielsweise eines Anhängers oder eines Aufliegers eines Lastkraftwagens oder eines mit einer Ladefläche oder einem Ladebehälter versehenen Lastkraftwagens, auf unterschiedliche Art und Weise erfassen. Die Detektionseinheiten können unterschiedliche auf die Fahrzeugerkennung abgestellte Sensoren aufweisen.

Beispielsweise könnte eine Erfassungsebene links und eine Erfassungsebene rechts vorgesehen sein, wobei dann, wenn das Fahrzeug eine solche Erfassungsebene kreuzt, ein entsprechendes Signal abgegeben wird.

Es könnten auch mehrere Sensoren vorgesehen sein. Vorzugsweise sind mindestens zwei Sensoren vorgesehen, die links und rechts der Ladestelle oder zumindest von der Mitte weg nach links und rechts versetzt vorgesehen sind. Aus der Stärke eines Signals von Ultraschallsensoren oder optischen Sensoren lässt sich beispielsweise durch Vergleich der beiden Sensoren durch einfache Überlegungen ein Kriterium für eine Schrägstellung oder eine seitliche Versetzung bilden, um dann entsprechend der Erfassung ein Signal zu erzeugen.

Das Signal könnte ein Lichtsignal sein; es können auch Richtungshinweise durch ein Lichtsignal oder eine Reihe von Lichtsignalen gegeben werden. Beispielsweise könnte eine Balkendarstellung oder eine Pfeildarstellung erzeugt werden, die dem Fahrer gleich die Richtungskorrektur vorgibt.

Es ist aber auch denkbar, dass ein Signal in maschinenerkennbarer Form an das Fahrzeug gesendet wird und dort durch eine automatische Einparkhilfe erkannt wird, die das Fahrzeug automatisch an die Ladestelle heranfährt. Auch können die Signale an das Fahrzeug gesandt werden, um von diesem im Führerstand optisch und/oder akustisch an den Fahrer wiedergegeben zu werden.

Durch eine erfindungsgemäße Ladestellenanfahrhilfsvorrichtung lässt sich eine für den Fahrer sehr große Hilfe zum rückwärtigen Anfahren schaffen. Auch mehr unerfahrene Fahrer können durch entsprechende Zeichen korrekt zu der Ladestelle hin gelotst werden. Die Hilfsvorrichtung kann wie ein Einweiser wirken.

Dadurch sind mechanische Einfahrhilfen vor Ladestellen mit ihren oben aufgezählten Nachteilen entbehrlich.

Gemäß dem weiteren Aspekt ist auch ein entsprechendes Verfahren zum Unterstützen oder Steuern des Anfahrens des Fahrzeuges an die Ladestelle angegeben. Gemäß diesem Verfahren wird eine Schrägstellung oder eine seitliche Versetzung des Fahrzeuges erkannt und daraufhin in Abhängigkeit von der Erfassung der Schrägstellung oder der seitlichen Versetzung ein Signal an das Fahrzeug abgegeben, um eine Korrektur des Anfahrens vorzunehmen.

Ausführungsbeispiele der Erfindung werden nachfolgend anhand der beigefügten Zeichnung näher erläutert. Darin zeigt:
- Fig. 1: eine schematische Darstellung einer Ladestelle mit einer ersten Ausführungsform einer Ladestellenanfahrhilfsvorrichtung;
- Fig. 2: eine schematische Draufsicht auf die Ladestelle von Fig. 1 bei einer ersten Situation eines Anfahrens des Fahrzeuges an die Ladestelle;
- Fig. 3: eine Darstellung vergleichbar von Fig. 2 bei einer zweiten Situation;
- Fig. 4: eine Darstellung vergleichbar von Fig. 2 bei einer dritten Situation beim Anfahren des Fahrzeuges;
- Fig. 5: eine Draufsicht auf eine Ladestelle mit einer schematischen Skizzierung eines Erfassungsbereiches einer Fahrzeugerfassungseinrichtung gemäß einer weiteren Ausführungsform;
- Fig. 6: einen Graph zur Verdeutlichung einer möglichen Erfassung einer Schrägstellung oder seitlichen Versetzung; und
- Fig. 7: in mehreren Teildarstellungen unterschiedliche Beispiele für unterschiedliche mögliche Signalgeber.; und
- Fig. 8: eine schematische Darstellung einer Ladestellenanfahrhilfsvorrichtung gemäß noch einer weiteren möglichen Ausführungsform.

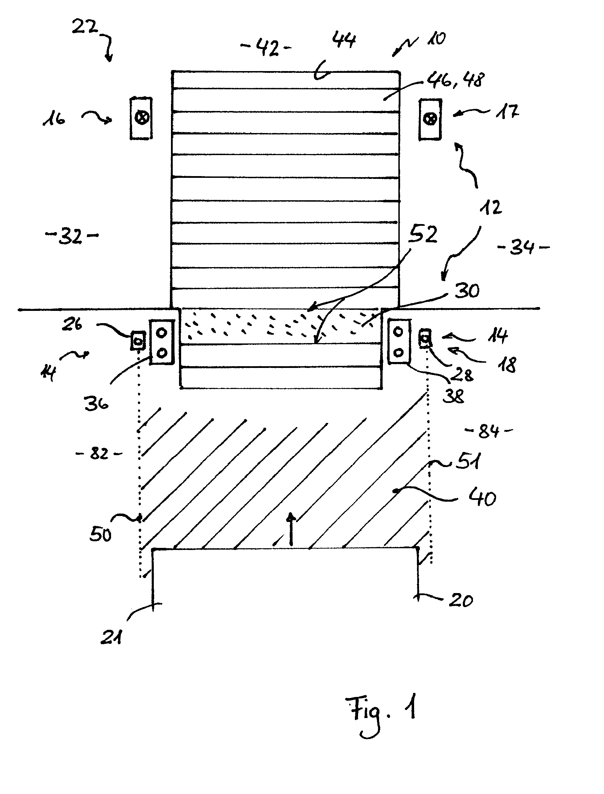

Im Folgenden wird anhand der Darstellung in den Fig. 1 bis 4 ein Andockverfahren zum Andocken eines Fahrzeuges 20, wie insbesondere eines Lastkraftwagens 21, an eine Ladestelle 10 erläutert. Das Andockverfahren wird mit Hilfe eines automatisch gesteuerten Verfahrens zum Unterstützen des Anfahrens der Ladestelle 10 durchgeführt. Dieses Verfahren zum Unterstützen des Anfahrens der Ladestelle 10 wird mittels einer Vorrichtung zum Unterstützen des Anfahrens der Ladestelle 10 durchgeführt, die im Folgenden als Ladestellenanfahrhilfsvorrichtung 12 bezeichnet wird.

In bevorzugter Ausgestaltung erfolgt das Andockverfahren des LKWs 21 mit Hilfe einer Auswerteeinheit 14 und optischen Signalgebern 16.

Die Ladestellenanfahrhilfsvorrichtung 12 hat eine im Bereich der Ladestelle 10 anzuordnende Fahrzeugerfassungseinrichtung 18 zur Erfassung des Fahrzeugs 20. Weiter weist die Ladestellenanfahrhilfsvorrichtung 12 eine Signaleinrichtung 22 zum Senden eines Signals an das Fahrzeug oder dessen Fahrer 24 auf.

Die Fahrzeugerfassungseinrichtung 18 ist zur automatischen Erfassung einer seitlichen Versetzung des Fahrzeuges 20 zu der Ladestelle 10 und/oder zur automatischen Erfassung eines schrägen Winkels des Fahrzeuges 20 relativ zu der Ladestelle 10 ausgebildet.

Die Signaleinrichtung 22 ist dazu ausgebildet, entsprechend der Erfassung durch die Fahrzeugerfassungseinrichtung 18 ein Signal zur Korrektur des Anfahrens an das Fahrzeug 20 oder dessen Fahrer 24 zu senden. Das Signal wird in Abhängigkeit von der Erfassung der seitlichen Versetzung oder des schrägen Winkels abgegeben.

In der in den Fig. 1 bis 4 dargestellten Ausführungsform der Ladestellenanfahrhilfsvorrichtung 12 weist die Fahrzeugerfassungseinrichtung 18 die Auswerteeinheit 14 auf, die mit Lichttaster o.ä. als Detektionseinheiten 26, 28 versehen ist. Zum Beispiel sind die Detektionseinheiten 26, 28 an der Vorderseite einer Ladebrücke 30 der Ladestelle 10 oder an einer ersten Seite 32 und einer zweiten Seite 34 neben der Ladebrücke 30 angeordnet.

Mit Hilfe der Auswerteeinheit 14 werden die ankommenden Lastkraftwagen 21 an die richtige Position geleitet. Ziel dieses Vorgangs ist es, dass der Lastkraftwagen 21 geradlinig zu der Verladestelle oder Ladestelle 10 geleitet wird und direkt vor Puffern 36, 38 der Ladestelle 10 steht. Der Verladevorgang an der Ladestelle 10 kann somit reibungslos ablaufen.

Ein beispielhafter Ablauf des Andockvorganges wird im Folgenden näher erläutert.

Die Fahrzeugerfassungseinrichtung 18 wird vor der Verladestelle oder Ladestelle 10 installiert. Zwischen den beiden installierten Detektionseinheiten 26, 28 liegt ein Erfassungsbereich 40. Nähert sich ein Lastkraftwagen 21 oder ein sonstiges Fahrzeug 20, so erfasst die Auswerteeinheit 14 das Fahrzeug 20 und steuert damit die Signaleinrichtung 22. Bei einer Ausgestaltung wird dann, sobald das Fahrzeug 20 den Erfassungsbereich zu einer der Seiten 32, 34 hin verlässt, dies durch die Auswerteeinheit 14 erfasst, woraufhin der entsprechende Signalgeber 16, 17 der Signaleinrichtung 22 angesteuert wird.

In den dargestellten Beispielen hat die Signaleinrichtung 22 an der ersten Seite 32 einen ersten Signalgeber 16 und an der zweiten Seite 34 einen zweiten Signalgeber 17. Die Signalgeber 16, 17 weisen in einer möglichen Ausgestaltung Leuchtmittel o.ä. auf und sind damit als optische Signalgeber ausgebildet.

Gemäß einer Ausgestaltung des Verfahrens zum Unterstützen des Anfahrens der Ladestelle 10 ist dann, sobald sich der Lastkraftwagen innerhalb des Erfassungsbereiches 40 befindet, weder der erste Signalgeber 16 noch der zweite Signalgeber 17 aktiv, d.h. Leuchtmittel o.ä. sind inaktiv.

Genauer zeigt Fig. 1 die Ladestelle 10 mit der Ladestellenanfahrhilfsvorrichtung 12. Die Ladestellenanfahrhilfsvorrichtung weist die Fahrzeugerfassungseinrichtung 18 und die Signaleinrichtung 22 auf.

In dem dargestellten Beispiel ist die Ladestelle 10 an einem Gebäude 42 ausgebildet und weist eine Verladeöffnung 44 auf, die durch ein Tor 46, wie beispielsweise ein Rolltor 48, verschließbar ist. Weiter weist die Ladestelle 10 der in Fig. 1 dargestellten Ausführungsform die Ladebrücke 30 auf, die beispielsweise als Klappbrücke oder Vorschubbrücke ausgebildet sein kann. Auf der ersten Seite 32, wie z.B. die in Draufsicht auf die Ladestelle von außen linke Seite, weist die Ladestelle 10 neben der Ladebrücke 30 den ersten Puffer 36 auf, während auf der zweiten Seite 34, beispielsweise der in Draufsicht von außen auf die Ladestelle 10 rechten Seite, neben der Ladebrücke 30 der zweite Puffer 38 angeordnet ist. Die Puffer dienen dazu, durch die Rückkante des Lastkraftwagens 21 angefahren zu werden, um so Stöße des Lastkraftwagens abzufangen und Beschädigungen an der Ladestelle 10 und an dem Lastkraftwagen 21 zu vermeiden. Derartige meist als Anfahrpuffer bezeichnete Puffer 36, 38 sind gut bekannt und seit längerem Stand der Technik. Sie werden daher nicht näher erläutert.

Die Ladestellenanfahrhilfsvorrichtung 12 dient dazu, ein korrektes Anfahren des Lastkraftwagens 21 in Anlage an die Puffer 36, 38 zu unterstützen oder - in einer vollautomatischen Version - auch zu steuern.

Hierzu weist die Fahrzeugerfassungseinrichtung 18 auf der ersten Seite 32 die erste Detektionseinheit 26 und auf der zweiten Seite 34 die zweite Detektionseinheit 28 auf.

Die Detektionseinheiten 26, 28 sind zur Erfassung von Fahrzeugen 20 - wie insbesondere Lastkraftwagen 21 - ausgebildet. Hierzu können ganz unterschiedliche Sensorprinzipien verwendet werden. Möglich sind optische Sensoren wie Lichttaster, Ultraschallsensoren, Radarsensoren o.ä.

Die Detektionseinheiten 26, 28 können ortsauflösende Sensoren aufweisen oder Sensoren, die eine Erfassungsebene 50, welche sich in den dargestellten Ausführungsbeispielen etwa senkrecht zu der Ebene der Verladeöffnung 44 bzw. im Wesentlichen senkrecht zu einer Ladekante 52 der Ladestelle 10 oder der Ladebrücke 30 erstrecken kann, daraufhin erfasst, ob diese Erfassungsebene 50 durch das Fahrzeug 20 gekreuzt wird.

In anderen Ausgestaltungen wird der durch die in den Fig. 1 bis 4 darstellten gepunkteten Linien angedeuteten Erfassungsebenen 50, 51 begrenzte Erfassungsbereich 40 daraufhin überwacht, ob sich das Fahrzeug 20 vollständig innerhalb des Erfassungsbereiches 40 befindet und diesen nicht verlässt.

In der konkret in den Fig. 1 bis 4 dargestellten Ausführungsform ist der Erfassungsbereich 40, der die korrekte Fahrspur definiert, zwischen einer auf einer ersten Seite 32, hier der in der Abbildung linken Seite, vorgesehenen ersten Erfassungsebene 50 und einer auf der zweiten Seite 34, hier der in der Abbildung rechten Seite, vorgesehenen Erfassungsebene 51 ausgebildet. Die erste Detektionseinheit 26 ist derart ausgebildet, dass sie einen auf der ersten Erfassungsebene 50 liegenden ersten Detektionsebenenbereich und/oder einen jenseits der ersten Erfassungsebene 50 weiter zur ersten Seite 32 hin liegenden ersten Detektionsbereich 82 daraufhin überwacht, ob sich darin ein Teil des Fahrzeugs 20 befindet. Die zweite Detektionseinheit 28 ist derart ausgebildet, dass sie einen auf der zweiten Erfassungsebene 51 liegenden zweiten Detektionsebenenbereich und/oder einen jenseits der zweiten Erfassungsebene 50 weiter zur zweiten Seite 34 hin liegenden zweiten Detektionsbereich 84 daraufhin überwacht, ob sich darin ein Teil des Fahrzeugs 20 befindet.

Die Auswerteeinheit 14 weist entsprechende Auswerteschaltungen oder eine mit einem entsprechenden Auswerteprogramm versehene Datenverarbeitungseinheit (z.B. Mikrocontroller) auf. Diese sind so ausgestaltet, dass sie aus Signalen der Detektionseinheiten 26, 28 ermitteln, ob die Erfassungsebenen 50, 51 durch das Fahrzeug 20 gekreuzt werden oder sich das Fahrzeug 21 zumindest teilweise außerhalb des Erfassungsbereichs 40 und in einem der Detektionsbereiche 82, 84 befindet. Je nach Art der Sensoren der Detektionsbereiche lässt sich auch das Maß der Abweichung von dem Erfassungsbereich 40 erfassen.

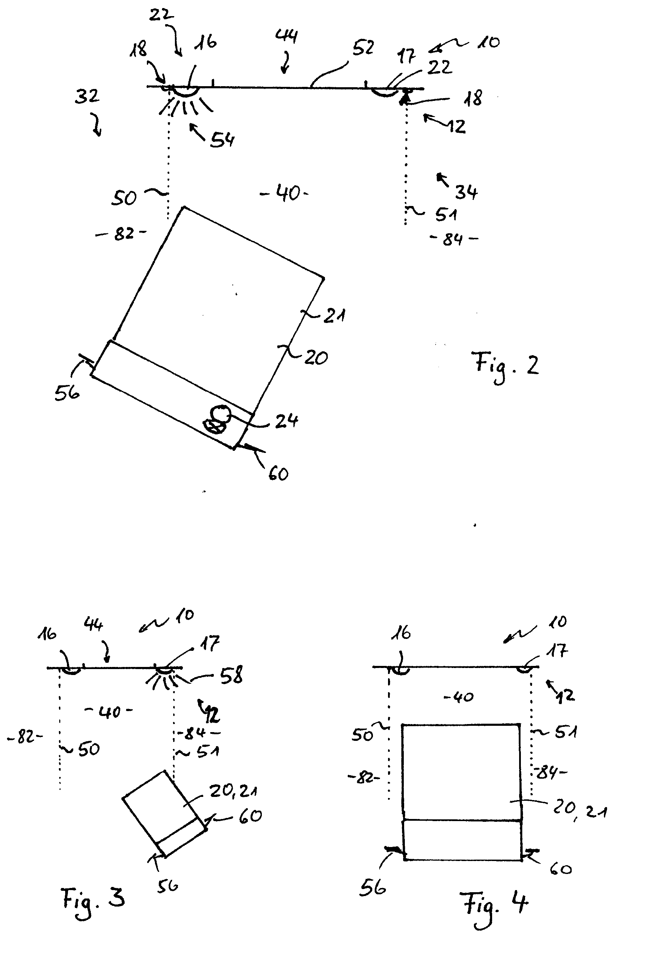

Die Fig. 2 bis 3 zeigen beispielhaft mögliche nacheinander eintretende Situationen im Verlauf des Andockverfahrens und erläutern ein typisches Durchführen einer ersten Ausführungsform des Verfahrens zum Unterstützen des Anfahrens der Ladestelle.

Beispielsweise ist in Fig. 2 eine seitliche Versetzung des als Beispiel für das Fahrzeug 20 wirkenden Lastkraftwagens 21 hin zu der linken Seite, also zu der ersten Seite 32 hin, angedeutet. Die Auswerteeinheit 14 erkennt, dass das Fahrzeug 20 teilweise zur ersten Seite 32 hin außerhalb des Erfassungsbereich 40 und im ersten Detektionsbereich 82 liegt und/oder dass das Fahrzeug 20 die erste Erfassungsebene 50 kreuzt. An der zweiten Erfassungsebene 51 und/oder im zweiten Detektionsbereich 84 ist keine Fahrzeugerfassung erkennbar. In diesem Fall wird lediglich der erste Signalgeber 16 auf der ersten Seite 32 angesteuert und somit ein erstes optisches Signal 54 auf der ersten Seite 32 abgegeben. Der Fahrer 24 kann über seinen auf der ersten Seite 32 vorgesehenen ersten Rückspiegel 56 das erste Signal 54 erkennen und somit intuitiv den Anfahrvorgang korrigieren.

In Fig. 3 ist die beispielhafte Situation dargestellt, dass der Fahrer 24 ausgehend von der Situation von Fig. 2 sein Fahrzeug 20 zu weit zu der zweiten Seite 34 hin gelenkt hat. In diesem Fall wird das Fahrzeug 20 an der zweiten Erfassungsebene 51 und/oder im zweiten Detektionsbereich 84 erfasst; die Auswerteeinheit 14 gibt dies an die Signaleinrichtung 22 ab, die den zweiten Signalgeber 17 betätigt, so dass auf der zweiten Seite 34 ein zweites optisches Signal 58 abgegeben wird. Dieses zweite Signal 58 kann der Fahrer über seinen zweiten Rückspiegel 60 auf der zweiten Seite 34 erkennen und den Anfahrvorgang entsprechend wiederum korrigieren.

Fig. 4 zeigt dann den Anfahrvorgang mit korrekt ausgerichtetem Fahrzeug 20. Hat der Fahrer 24 sein Fahrzeug 20 korrekt etwa im Wesentlichen senkrecht zur Ebene der Verladeöffnung 44 bzw. zur Ladekante 52 hin ausgerichtet, dann wird sein Fahrzeug 20 weder an der ersten Erfassungsebene 50 noch an der zweiten Erfassungsebene 51 erfasst; beide Signalgeber 16, 17 geben kein Signal zur Korrektur ab. Der Fahrer 24 erkennt somit die korrekte Ausrichtung seines Fahrzeuges 20.

Die Fahrzeugerfassungseinrichtung 18 kann unterschiedliche Sensortechniken verwenden. Möglich sind ortsauflösende Sensoren. Anstelle von mehreren Detektionseinheiten 26, 28 könnte auch eine Kamera mit automatischer Bildauswertung vorhanden sein. Am einfachsten und robustesten sind jedoch Fahrzeugerfassungseinrichtungen 18 mit mehreren Detektionseinheiten 26, 28 zu realisieren. Bei einer einfachen Ausgestaltung geben die Detektionseinheiten nur ein digitales Signal - z.B. 1 für Fahrzeug im ersten Detektionsbereich und 0 für kein Fahrzeug im ersten Detektionsbereich - ab.

Es reicht z.B. in einer einfacheren Version aus, mittels Lichttastern die Erfassungsebenen 50, 51 links und rechts der Ladestelle 10 auf das Vorhandensein eines Fahrzeuges 20 zu erfassen.

Die Detektionseinheiten 26, 28 könnten hierzu auch mit Blenden versehen sein, so dass nur dann eine Signalerzeugung erfolgt, wenn ein Fahrzeug 20 außerhalb des Erfassungsbereiches 40 detektiert wird.

Aufwändigere Sensoren, wie z.B. ortsauflösende Radar- oder Ultraschallsensoren oder auf Kameras mit Bildauswertung basierende Sensoren können entsprechend aufwändigere Signale liefern, die auch Informationen über das Ausmaß der Abweichung und über den Grad oder das Ausmaß der Durchzuführenden Korrektur liefern.

Weiter ist es nicht unbedingt notwendig, die Detektionseinheiten ganz außenseitig, seitlich zu der Ladestelle 10 zu positionieren. Es kann vorteilhaft sein, die Detektionseinheiten an Stellen zu positionieren, wo ohnehin wegen anderer Funktionen der an der Ladestelle 10 vorgesehenen Verladeeinrichtung Sensoren oder Aktoren vorzusehen sind und entsprechende Leitungen für Signale und/oder Versorgung vorliegen.

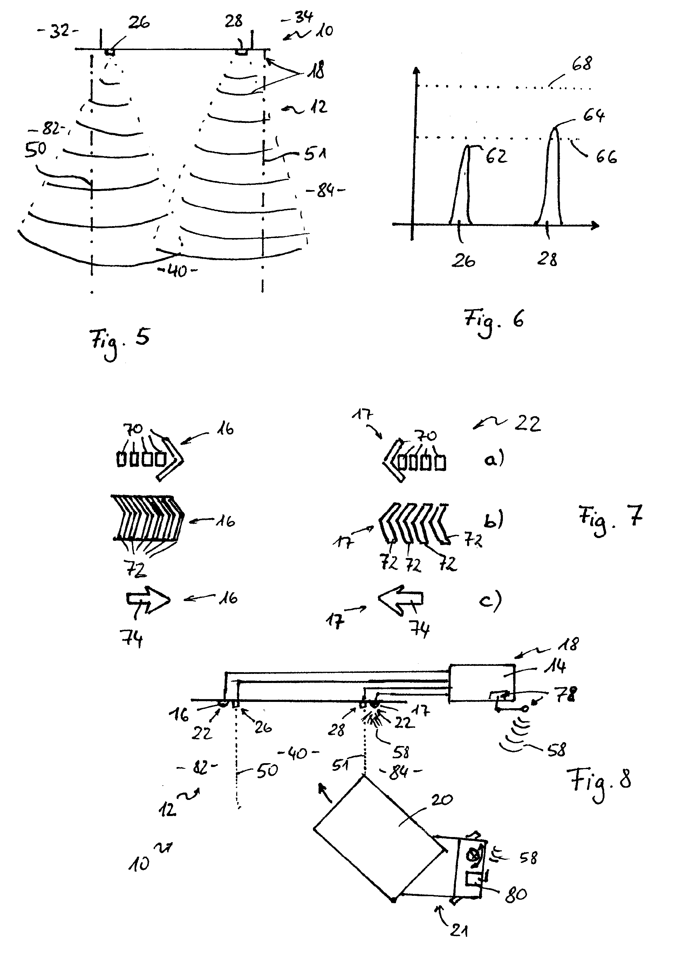

Bei der in Fig. 5 dargestellten weiteren beispielhaften Ausführungsform der Fahrzeugerfassungseinrichtung 18 sind eine erste Detektionseinheit 26 und eine zweite Detektionseinheit 28 zwar von der Mitte der Ladestelle 10 aus zu der ersten Seite 32 bzw. der zweiten Seite 34 hin seitlich versetzt angeordnet; hier sind aber Detektionseinheiten 26, 28 verwendet, die an der Ladebrücke 30 vorgesehen sind und sich überlappende Detektionsbereiche 62 aufweisen. Fig. 6 zeigt, dass dennoch auch mit einer solchen Ausgestaltung einfach über die Elektronik der Erfassungsbereich 40 daraufhin überwacht werden kann, ob er von dem Fahrzeug 20 verlassen wird. Hierzu sind beispielhaft in Fig. 6 eine erste Signalstärke 62 der ersten Detektionseinheit 26 und eine zweite Signalstärke 64 der zweiten Detektionseinheit 28 miteinander verglichen. Es werden ein unterer Schwellwert 66 für die Signalstärken 62, 64 und ein oberer Schwellwert 68 für die Signalstärken 62, 64 gesetzt. Ein Kreuzen der ersten Erfassungsebene 50 durch das Fahrzeug 20 wird dann erfasst, wenn nur die die durch die erste Detektionseinheit 26 erfolgte Erfassung des Fahrzeuges 20 angebende erste Signalstärke 62 über dem unteren Schwellwert 26, nicht jedoch die zweite Signalstärke 64 über dem unteren Schwellwert liegt. Fig. 6 zeigt die Situation, dass die zweite Signalstärke 64 oberhalb des unteren Schwellwerts 66 liegt, jedoch nicht die erste Signalstärke 62. Demnach zeigt Fig. 6 konkret ein Beispiel, wo ein Kreuzen der zweiten Erfassungsebene 51 durch das Fahrzeug 20 erkannt wird. Die Signalstärken 62, 64 können z.B. den Abstand des Fahrzeuges 20 von den jeweiligen Detektionseinheiten 26, 28 angeben. Damit kann zusätzlich zu der Erfassung einer Schrägstellung oder seitlichen Versetzung auch die bisher bereits bekannte Funktion einer Erfassung des Abstandes des Fahrzeuges 20 von der Ladekante realisiert werden. Wird beispielsweise der obere Schwellwert 68 durch eine oder beide der Signalstärken 64 überschritten, dann kann ein (nicht dargestelltes) Stopsignal, wie z.B. eine rote Ampel angesteuert werden, um dem Fahrer 24 anzuzeigen, dass er anhalten soll.

Diese mögliche Erfassung der Schrägstellung oder Versetzung ist anhand der Fig. 5 und 6 nur stark schematisiert und vereinfacht dargestellt worden; der Fachmann kann aber leicht anhand dieser Angaben und anhand von Versuchen an der jeweiligen Ladestelle 10 die für die Ladestelle 10 optimale Einstellung der Fahrzeugerfassungseinrichtung 18 ermitteln, um so das zuvor erläuterte Verfahren mit Signalgebung zur Korrektur eines Anfahrvorganges durchzuführen.

Im Folgenden werden anhand der Darstellung in Fig. 7 weitere mögliche Ausführungsformen für die Signaleinrichtung 22 näher erläutert.

Wie in den Fig. 1 bis 4 dargestellt, kann der erste Signalgeber 16 und der zweite Signalgeber 17 einfach durch ein einfaches Leuchtmittel realisiert werden, wobei der erste Signalgeber 16 aktiv wird, wenn ein Fahrzeug 20 in der ersten Erfassungsebene 50 oder in dem ersten Detektionsbereich 82 erfasst wird und der zweite Signalgeber 17 aktiv wird, wenn ein Fahrzeug in der zweiten Erfassungsebene 51 bzw. dem zweiten Detektionsbereich 84 erfasst wird.

Es ist dem Fachmann jedoch leicht ersichtlich, dass bei entsprechend verwendeter Sensorik nicht nur das Vorhandensein einer seitlichen Versetzung des Fahrzeuges oder einer Schrägstellung des Fahrzeuges erfasst werden kann, sondern auch der Grad der Versetzung oder der Grad der Schrägstellung.

Entsprechend kann die Signaleinrichtung 22 auch so ausgebildet sein, dass sie dem Fahrer ein Maß angibt, wie stark er korrigieren muss. In Fig. 7, Teildarstellung a), sind als Beispiel für die Signalgeber 16, 17 Leuchtmittel in Form einer Pfeildarstellung mit unterschiedlichen Segmenten 70 angegeben. Je nachdem, wie weit der Fahrer 24 seinen Andockvorgang korrigieren muss, können eine unterschiedliche Anzahl von Segmenten 70 angeleuchtet werden. Bei der Darstellung b) von Fig. 7 ist anstelle eines Pfeiles mit unterschiedlichen Pfeilsegmenten 70 eine Anordnung von mehreren Pfeildarstellungen 72 durch Leuchtmittel realisiert. Je nach Grad der Korrektur kann eine unterschiedliche Anzahl von Pfeildarstellungen 72 beleuchtet werden. Es ist auch möglich, die Anordnung der Pfeildarstellungen 72 nacheinander aufblinken zu lassen, um so dem Fahrer mehr intuitiv ein Korrektursignal anzugeben. Auch kann die Schnelligkeit der Blinkfolge variieren. In der Teildarstellung c) von Fig. 7 sind als optische Signalgeber Leuchtmittel in Pfeilform 74 wiedergegeben, die mit unterschiedlichen Blinksequenzen und/oder mit unterschiedlicher Lichtintensität angesteuert werden können. Ist nur eine kleine Korrektur hin zur Mitte erforderlich, wird die entsprechende Pfeilform 74 durch eine langsame Blinksequenz angesteuert. Muss dagegen eine schnelle und starke Korrektur erfolgen, werden eine entsprechend schnellere Blinkfolge und/oder eine größere Lichtintensität gewählt.

Bei den bisher erläuterten Ausführungsformen der Ladestellenanfahrhilfsvorrichtung 12 werden Signalgeber 16, 17, die links und rechts der Ladestelle 10 anzuordnen sind, zur Abgabe optischer Signale 54, 58 an den Fahrer 24 eingesetzt. Allerdings kann die Signaleinrichtung 22 auch zur Abgabe anderer Signale ausgebildet sein. Fig. 8 zeigt eine Ausgestaltung der Ladestellenanfahrhilfsvorrichtung 12, bei der die Signaleinrichtung 22 einen Sender 78 aufweist, um die entsprechenden Signale zur Korrektur des Anfahrvorganges durch drahtlose Kommunikation, wie insbesondere Funkkommunikation, an das Fahrzeug 20 zu senden. Das Fahrzeug 20 ist bei dieser Ausgestaltung mit einer entsprechenden Empfangseinrichtung 80 zum Empfang der Signale ausgestattet. Hier können die Signale bei einer Ausgestaltung dem Fahrer 24 optisch und/oder akustisch dargestellt werden. Ist das Fahrzeug 20 mit einer automatischen Einparkanlage ausgestattet, können die Signale auch dazu verwendet werden, automatische Lenkbewegungen zur Korrektur des Anfahrvorganges zu erzeugen.

Bei den gezeigten Ausführungsformen ist die Ladestelle 10 als Ladedock mit Ladebrücke und Ladekante vor einem Tor dargestellt. Die Ladestelle 10 kann aber auch anders aufgebaut sein. Z.B. kann die Verladeöffnung 44 als Einfahrt für das Fahrzeug 20 ebenerdig ausgebildet sein, und die Ladestellenanfahrhilfsvorrichtung 12 wird dazu genutzt, dem Fahrzeug 20 die richtige Fahrspur zum geradlinigen Einfahren in diese Einfahrt vorzugeben. Somit können wie bei den LKW-Einfahrhilfen Beschädigungen vermieden werden, allerdings ohne die mit solchen Einfahrhilfen behafteten Nachteile.

### Bezugszeichenliste:

- 10: Ladestelle
- 12: Ladestellenanfahrhilfsvorrichtung
- 14: Auswerteeinheit
- 16: erster Signalgeber
- 17: zweiter Signalgeber
- 18: Fahrzeugerfassungseinrichtung
- 20: Fahrzeug
- 21: Lastkraftwagen
- 22: Signaleinrichtung
- 24: Fahrer
- 26: erste Detektionseinheit
- 28: zweite Detektionseinheit
- 30: Ladebrücke
- 32: erste Seite
- 34: zweite Seite
- 36: erster Puffer
- 38: zweiter Puffer
- 40: Erfassungsbereich
- 42: Gebäude
- 44: Verladeöffnung
- 46: Tor
- 48: Rolltor
- 50: erste Erfassungsebene
- 51: zweite Erfassungsebene
- 52: Ladekante
- 54: erstes Signal
- 56: erster Rückspiegel
- 58: zweites Signal
- 60: zweiter Rückspiegel
- 62: erste Signalstärke
- 64: zweite Signalstärke
- 66: unterer Schwellwert
- 68: oberer Schwellwert
- 70: Pfeilsegment
- 72: Pfeildarstellung
- 74: Pfeilform
- 78: Sendeeinrichtung
- 80: Empfangseinrichtung
- 82: erster Detektionsbereich
- 84: zweiter Detektionsbereich

## Patentansprüche

1. Ladestellenanfahrhilfsvorrichtung (12) zur Unterstützung eines Anfahrens einer Ladestelle (10) durch ein zu be- oder entladendes Fahrzeug (20) mit einer im Bereich der Ladestelle (10) anzuordnenden Fahrzeugerfassungseinrichtung (18) zur Erfassung des Fahrzeugs (20) und einer Signaleinrichtung (22) zum Senden eines Signals (54, 58) an das Fahrzeug (20) oder dessen Fahrer (24), wobei die Fahrzeugerfassungseinrichtung (18) zur automatischen Erfassung einer seitlichen Versetzung oder eines schrägen Winkels des Fahrzeugs (20) relativ zu der Ladestelle (10) ausgebildet ist und wobei die Signaleinrichtung (22) dazu ausgebildet ist, in Abhängigkeit von einer entsprechenden Erfassung durch die Fahrzeugerfassungseinrichtung (18) ein eine seitliche Versetzung oder einen schrägen Winkel angebendes Signal (54, 58) an das Fahrzeug (20) oder dessen Fahrer (24) zur Korrektur des Anfahrvorganges anzugeben.

2. Ladestelleanfahrhilfsvorrichtung nach Anspruch 1,
**dadurch gekennzeichnet,**
**dass** sowohl die Fahrzeugerfassungseinrichtung (18) als auch die Signaleinrichtung (22) zur Anordnung an der Ladestelle (10) ausgebildet sind.

3. Ladestellenanfahrhilfsvorrichtung (12) nach einem der voranstehenden Ansprüche,
**dadurch gekennzeichnet,**
**dass** die Fahrzeugerfassungseinrichtung (18) eine an einer ersten Seite (32) der Ladestelle (10) anzuordnende erste Detektionseinheit (26) aufweist, die dazu ausgebildet ist, wenigstens einen sich im Wesentlichen quer zu einer Ladekante (52) der Ladestelle (10) erstreckenden seitlich an der Ladestelle (10) angeordneten ersten Detektionsbereich (82) daraufhin zu überwachen, ob sich ein Fahrzeug (20) in diesem ersten Detektionsbereich befindet oder diesen kreuzt, und
**dass** die Fahrzeugerfassungseinrichtung (18) eine an der zweiten Seite (34) der Ladestelle (10) anzuordnende zweite Detektionseinheit (28) aufweist, die dazu ausgebildet ist, wenigstens einen sich im Wesentlichen quer zu einer Ladekante (52) der Ladestelle (10) erstreckenden seitlich an der Ladestelle (10) angeordneten zweiten Detektionsbereich (84) daraufhin zu überwachen, ob sich ein Fahrzeug (20) in diesem zweiten Detektionsbereich befindet oder diesen kreuzt.

4. Ladestellenanfahrhilfsvorrichtung (12) nach Anspruch 3,
**dadurch gekennzeichnet,**
**dass** die Fahrzeugerfassungseinrichtung (18) derart ausgebildet ist, dass sie das Vorliegen einer Schrägstellung oder einer seitlichen Versetzung des Fahrzeugs (20) dann erkennt, wenn von der ersten (26) und der zweiten Detektionseinheit (28) nur eine das Fahrzeug (20) in dem jeweils zugeordneten Detektionsbereich (82, 84) erfasst.

5. Ladestellenanfahrhilfsvorrichtung (12) nach einem der Ansprüche 3 oder 4,
**dadurch gekennzeichnet,**
**dass** die Fahrzeugerfassungseinrichtung (18) derart ausgebildet ist,
a) **dass** sie einen korrekten, geradlinigen Anfahrvorgang erfasst, wenn von der ersten (26) und der zweiten Detektionseinheit (28) beide oder keine das Fahrzeug (20) erfassen und/oder
b) **dass** sie einen korrekten, geradlinigen Anfahrvorgang durch Vergleich von Signalstärken mehrerer Detektionseinheiten (26, 28) erfasst.

6. Ladestellenanfahrhilfsvorrichtung (12) nach einem der Ansprüche 3 bis 5,
**dadurch gekennzeichnet,**
**dass** die Signaleinrichtung (22) einen ersten Signalgeber (16) zum Anzeigen einer Versetzung oder Schrägstellung des Fahrzeugs (20) zu der ersten Seite (32) hin und einen zweiten Signalgeber (17) zum Anzeigen einer Versetzung oder Schrägstellung des Fahrzeugs (20) zu der zweiten Seite (34) hin aufweist.

7. Ladestellenanfahrhilfsvorrichtung (12) nach Anspruch 6,
**dadurch gekennzeichnet,**
**dass** der erste Signalgeber (16) zur Abgabe eines optischen Signals an der ersten Seite (32) ausgebildet ist und der zweite Signalgeber (17) zur Abgabe eines optischen Signals an der zweiten Seite (34) ausgebildet ist.

8. Ladestellenanfahrhilfsvorrichtung (12) nach einem der Ansprüche 6 oder 7,
**dadurch gekennzeichnet,**
**dass** der erste Signalgeber (16) mit der ersten Detektionseinheit (26) verbunden ist, um wenigstens ein erstes Signalzeichen abzugeben, wenn die erste Detektionseinheit (26) das Fahrzeug (20) in dem ersten Detektionsbereich (50, 84) erfasst und/oder
**dass** der zweite Signalgeber (17) mit der zweiten Detektionseinheit (28) verbunden ist, um wenigstens ein zweites Signalzeichen abzugeben, wenn die zweite Detektionseinheit (28) das Fahrzeug (20) in dem zweiten Detektionsbereich (51, 84) erfasst.

9. Ladestelle (10) oder Ladedock oder an einem Gebäude anzubringende Verladeeinrichtung, umfassend eine Ladestellenanfahrhilfsvorrichtung (12) nach einem der voranstehenden Ansprüche.

10. Ladestelle (10) oder Ladedock oder Verladeeinrichtung nach Anspruch 9 mit einer Ladestellenanfahrhilfsvorrichtung (12) nach einem der Ansprüche 3 bis 8, **gekennzeichnet durch** eine Ladebrücke (30) und einen ersten Anfahrpuffer (36) im Bereich einer ersten Seite (32) der Ladebrücke (30) und einen zweiten Anfahrpuffer (38) im Bereich einer zweiten Seite (34) der Ladebrücke (30), wobei sich der erste Detektionsbereich (82) zumindest teilweise von dem ersten Puffer (36) aus weiter in Richtung der ersten Seite (32) versetzt und in Richtung von der Ladebrücke (30) weg erstreckt und sich der zweite Detektionsbereich (84) zumindest teilweise von dem zweiten Puffer (38) aus weiter in Richtung der zweiten Seite (34) versetzt und in Richtung von der Ladebrücke (30) weg erstreckt.

11. Ladestelle (10) oder Ladedock oder Verladeeinrichtung nach einem der Ansprüche 9 bis 10,
**dadurch gekennzeichnet,**
**dass** die Signaleinrichtung (22) an der Ladestelle, dem Ladedock bzw. der Verladeeinrichtung angeordnet ist, um von hier aus Signale an das Fahrzeug abzugeben.

12. Verfahren zum Unterstützen oder Steuern eines Anfahrens eines Fahrzeugs (20) an eine Ladestelle (10) umfassend:
a) automatisches Erfassen einer Schrägstellung oder einer seitlichen Versetzung des Fahrzeugs (20) relativ zu der Ladestelle (10), und
b) Abgeben eines Signals (54, 58) in Abhängigkeit der erfassten Schrägstellung oder seitlichen Versetzung zur Korrektur des Anfahrens, **dadurch gekennzeichnet,**
**dass** Schritt a) umfasst:
Überwachen, ob sich das oder ein Teil des Fahrzeugs (20) in einem linken Detektionsbereich (82) links von der Ladestelle (10) und/oder in einem rechten Detektionsbereich (84) rechts von der Ladestelle (10) befindet, und
**dass** Schritt b) umfasst:
Abgeben eines optischen Zeichens auf der linken Seite (34) neben der Ladestelle (10), wenn sich das Fahrzeug (20) in dem linken Detektionsbereich (82) befindet, und Abgeben eines optischen Zeichens auf der rechten Seite (32) neben der Ladestelle (10), wenn sich das Fahrzeug (20) in dem rechten Detektionsbereich (84) befindet.
